# EUROPEAN PATENT SPECIFICATION

(11) **EP 0 652 066 B1**
(45) Date of publication and mention of the grant of the patent: **09.12.1998**
(21) Application number: 94307289.2
(22) Date of filing: 05.10.1994
(51) Int. Cl.: B23D 49/00, B23D 57/00

(54) **Clamping assembly for cutting apparatus**
Einrichtung zum Festspannen für eine Schneidevorrichtung
Assemblage de serrage pour un dispositif de coupe

(30) Priority: 05.11.1993 GB 9322829
(43) Date of publication of application: 10.05.1995
(73) Proprietor: British Nuclear Fuels PLC, Risley Warrington Cheshire, WA3 6AS (GB)
(72) Inventor: Taylor, Leonard Samual David, Seascale, Cumbria CA20 1PG (GB)
(74) Representative: McCormack, Derek James

(56) References cited:
- EP-A- 0 538 206
- DE-C- 675 796
- GB-A- 2 230 988

## Description

This invention relates to a remotely-controlled apparatus for cutting a workpiece and, in particular, to a workpiece clamping assembly for use with a remotely-controlled saw.

In certain situations it is desirable to cut radioactively contaminated scrap metal items to the required size so that the items can be disposed of in a safe manner. This has required an operative to enter a shielded enclosure, for example a cave or cell, to carry out the cutting operation. An obvious disadvantage of this procedure is that the operative may be exposed to harmful doses of radiation.

To overcome this problem it is known to locate the cutting apparatus within the shielded enclosure and to control the operation of the apparatus from a remote location outside the enclosure (see e.g. EP-A-0 538 206). However, one difficulty encountered with remotely-controlled cutting apparatus has been the need for a suitable clamping assembly for holding the workpieces during the cutting operation. The requirements of the clamping assembly are that it should hold the workpiece very firmly and must facilitate the reception and removal of workpieces handled by remotely-controlled manipulators installed in the enclosure.

According to the present invention a remotely-controlled apparatus for cutting a workpiece includes a saw for cutting the workpiece and comprises a clamping assembly for holding the workpiece to be cut, the clamping assembly comprising a workpiece locating means, an actuator having a piston rod extending therefrom and a flexible band comprising a chain formed by a series of spaced rollers interconnected by links and having a portion contacting the workpiece when located in the workpiece locating means, whereby movement of the piston rod away from the workpiece locating means causes the chain to hold the workpiece in the workpiece locating means, wherein the chain is attached at one end to a chain attachment mounted on an end of the piston rod remote from the actuator, and wherein the chain attachment is provided with a projection which extends through a gap formed between adjacent rollers in the chain at a region thereof remote from said one end.

The chain attachment may have two projections which extend through two gaps formed between successive rollers of the chain.

Preferably, the chain attachment is adapted such that the said one end of the chain is connected thereto at a location below a longitudinal axis of the piston rod and the projection or projections on the chain attachment engage the chain at a location above the said axis.

The workpiece locating means may comprise two surfaces arranged with an angle between them, the arrangement being such that the chain holds the workpiece against each of the surfaces.

In a preferred embodiment the actuator comprises a pneumatically-operated cylinder and piston assembly.

Embodiments of the invention will now be described, by way of example, with reference to the accompanying drawings, in which:
Figure 1 is a side elevation of a remotely-controlled saw which incorporates a workpiece clamping assembly according to a preferred aspect of the invention;

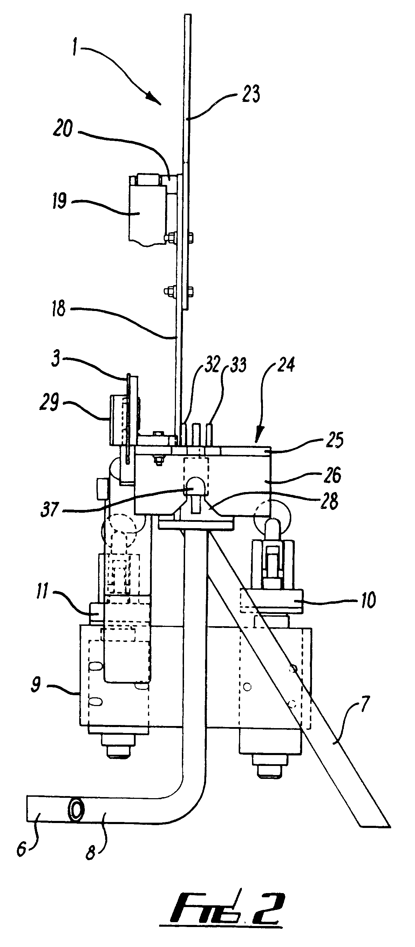

Figure 2 is a front elevation of the remotely-controlled saw shown in Figure 1 with the clamping chain removed for clarity;

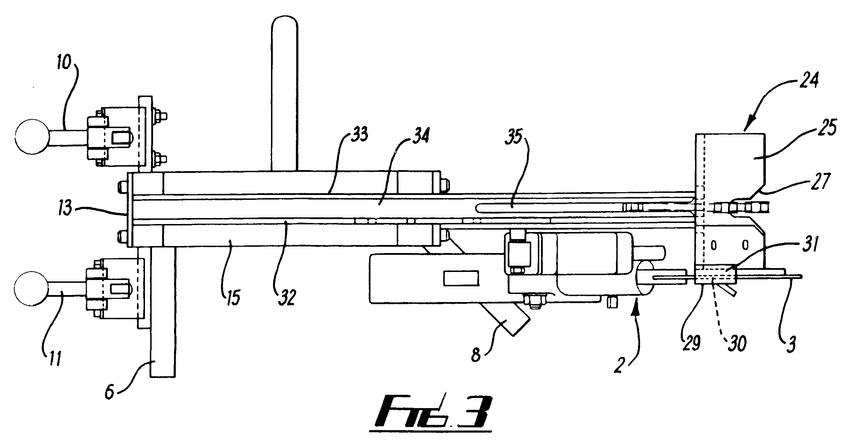

Figure 3 is a plan view of the remotely-controlled saw shown in Figures 1 and 2, and
Figure 4 is a part sectional side elevation of the clamping assembly.

Referring to the drawings, there is shown a remotely-controlled cutting apparatus, in particular a saw, suitable for cutting up radioactive scrap items or workpieces to the required size for subsequent disposal. The saw is located with a shielded cell or cave and is operated by a manipulator which is controlled from a location outside the cell.

The cutting apparatus includes a fabricated stand 1 which supports a pneumatically-operated saw 2 equipped with a saw blade 3 for cutting a workpiece 4 held by a clamping device 5.

The stand 1 is supported on three legs 6, 7 and 8. Welded to the leg 6 is a plate 9 on which two lever-operated valves 10, 11 are mounted for controlling the pneumatic system associated with the apparatus. A bottom plate 12, welded to the upper surfaces of the three legs 6, 7 and 8, and two end plates 13, 14 provide a mounting for a clamping actuator 15, preferably a pneumatically-operated cylinder and piston assembly, which forms part of the clamping assembly 5. The actuator 15 is secured to the end plates 13, 14 by screws 16.

The saw 2 is pivotably mounted on a pivot pin 17 which is welded to a support plate 18 forming part of the stand 1. Cutting feed pressure for the saw 2 is derived from a pneumatically-operated saw feed cylinder 19, which is pivotably mounted at its upper end on a pivot pin 20 welded to the support plate 18. A piston rod 21 extending from the lower end of the saw feed cylinder 19 is connected to the saw 2 by means of an adaptor 22. A lifting eye 23, secured to the upper end of the support plate 18, enables the stand 1 to be handled by a manipulator installed in the cell.

At the forward end of the support plate 18 is an angle bracket 24, formed from a short length of an equal angle bar, which serves as a locating means for the workpiece 4. The angle bracket 24 has a horizontal arm 25 and a vertical arm 26, each arm having a cut-out portion 27, 28 extending inwardly from an outer edge of the respective arm. Bolted to the upper surface of the horizontal arm 25 is a saw blade guide 29 which has a vertical slot 30, in which the saw blade 3 can be accommodated. The slot 30 is closed at its upper end by a stop plate 31.

Extending rearwardly from the angle bracket 24 is a trough formed from side walls 32, 33 and a base strip 34. The trough extends to the rear end plate 13, to which the base strip is welded, so as to overlie the clamping actuator 15. A blind slot 35, cut centrally along the length of the base strip 34, extends rearwardly from the angle bracket 24.

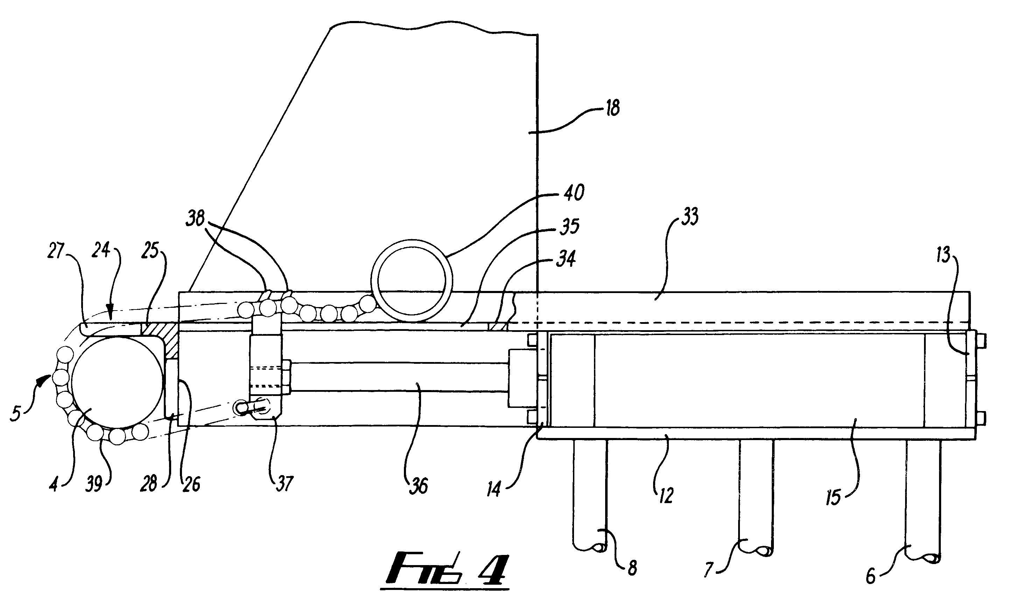

As best seen in Figure 4, a piston rod 36 extends forwardly from the clamping actuator 15. Mounted on the piston rod 36 at an end remote from the actuator 15 is a chain attachment 37. The chain attachment 37 has an upper region of reduced width which extends through the groove 35 formed in the base strip 34. Two chain hooks, in the form of rearwardly inclined projections 38, are formed at the top of the chain attachment 37 so as to project above the groove 35. The lower region of the chain attachment is also reduced in width and receives the end pin of a roller chain 39, which is of the known type comprising a series of rollers interconnected by links. Welded to the other end of the chain 39 is a short tube 40, the length of which is such that it can rest on the base strip 34 between the side walls 32, 33 of the trough.

The roller chain 39 extends from the bottom end of the chain attachment 37 and, when in its clamping position, passes around the workpiece 4. After passing around the workpiece 4, the chain 39 is engaged by the two projections 38 which extend through gaps formed between adjacent rollers of the chain. Thus, the chain 39 is connected to the chain attachment 37 above and below the longitudinal axis of the actuator piston rod 36. Upon retraction of the piston rod 36 towards the clamping actuator 15, the workpiece is pulled by the chain 39 against the inner surfaces of the horizontal and vertical arms 25, 26 of the angle bracket 24.

It will be apparent that the clamping device 5 can accommodate workpieces of various sizes. For larger workpieces the two projections 38 will engage the chain 39 at a region nearer to the tube 40. When smaller workpieces are clamped, the two projections 38 will engage the chain 39 at a region further away from the tube 40, the chain extending further into the cut-out portions 27, 28 before and after its engagement with the workpiece.

The roller chain 39 may be replaced by other forms of flexible band, such as, for instance, a metal strip provided with a series of holes through which the 38 projections can pass.

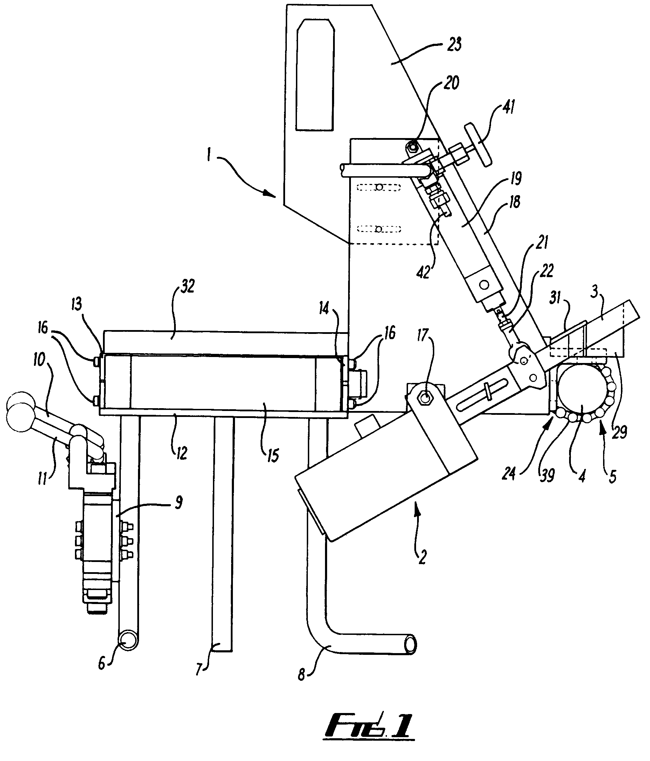

When the apparatus is at rest the weight of the saw 2 is so disposed that the saw tends to rotate in an anti-clockwise direction, as seen in Figure 1, about the pivot pin 17. Thus, the piston rod 21 is pushed up into the saw feed cylinder 19 so that the saw blade 3 rests within the vertical slot 30 of saw blade guide 29 and is urged against the stop plate 31. The piston rod 36 is fully extended from the clamping actuator 15 and the chain 39 is freely suspended from the chain attachment 37.

The saw operates in the following manner. A workpiece 4, for example, a piece of radioactively contaminated metal scrap, is placed by a manipulator in the angle bracket 24 so that it rests against the inner surfaces of the horizontal and vertical arms 25, 26. The manipulator then takes hold of the tube 40 and moves it so that the chain 39 passes around the workpiece 4. After tensioning the chain 39 so that the workpiece 4 is held firmly in the angle bracket 24 the manipulator then deposits the tube 40 on the trough base strip 34. This allows the two chain attachment projections 38 to pass through the gaps formed between three successive rollers in the chain 39.

Valve 10 is then operated to allow pressurised air into the actuator 15 so as to cause retraction of the piston rod 36. The chain attachment 37 thus tightens the chain 39 around the workpiece 4 so that the latter is rigidly clamped against the arms 25, 26 of the angle bracket 24. Operation of the valve 10 also allows pressurised air to pass to the valve 11 so that when the latter is operated air is supplied to the saw 2 so as to cause reciprocation of the blade 3. Simultaneously, air is supplied through an in-line restrictor and then through a tee piece to the saw feed cylinder 19. From the tee piece pressurised air is also vented through a needle control valve 41 and directed onto the saw blade 3 through a line 42. The vented air serves to blow off swarf and deposits excess lubricating oil onto the saw blade. The restrictor is adjusted so that the pressure exerted by the saw feed cylinder 19 on the saw blade 3 provides the desired cutting feed rate. After the saw blade has cut through the workpiece, the procedure described above is reversed so that the saw is ready to receive a further workpiece to be cut.

It has been found that the clamping assembly provides effective clamping of the workpiece during the cutting operation and also facilitates the placement and removal of a workpiece by a remotely-controlled manipulator.

## Claims

1. A remotely-controlled apparatus for cutting a workpiece (4) includes a saw (3) for cutting the workpiece (4) and comprises a clamping assembly (5) for holding the workpiece (4) to be cut, the clamping assembly (5) comprising a workpiece locating means (24), an actuator (15) having a piston rod (36) extending therefrom, and a flexible band (39) comprising a chain formed by a series of spaced rollers interconnected by links and having a portion contacting the workpiece (4) when located in the workpiece locating means (24), whereby movement of the piston rod (36) away from the workpiece locating means (24) causes the chain (39) to hold the workpiece (4) in the workpiece locating means (24), wherein the chain (39) is attached at one end to a chain attachment (37) mounted on an end of the piston rod (36) remote from the actuator (15), and wherein the chain attachment (37) is provided with a projection (38) which extends through a gap formed between adjacent rollers in the chain (39) so as to releasably engage the chain (39) at a region thereof remote from said one end.

2. A remotely-controlled apparatus according to Claim 1, wherein the chain attachment (37) has two projections (38) which extend through two gaps formed between successive rollers of the chain (39).

3. A remotely-controlled apparatus according to Claim 1 or Claim 2, wherein the chain attachment (37) is adapted such that the said one end of the chain (39) is connected thereto at a location below a longitudinal axis of the piston rod (36) and the projection or projections (38) on the chain attachment (37) engage the chain at a location above the said axis.

4. A remotely-controlled apparatus according to any one of the preceding Claims, wherein the workpiece locating means (24) comprises two surfaces arranged with an angle between them, the arrangement being such that the chain holds the workpiece (4) against each of the surfaces.

5. A remotely-controlled apparatus according to any one of the preceding claims, wherein the actuator (15) comprises a pneumatically-operated cylinder and piston assembly.

## Patentansprüche

1. Eine ferngesteuerte Vorrichtung zum Zerschneiden eines Werkstücks (4) umfaßt eine Säge (3) zum Zerschneiden des Werkstücks (4) und weist eine Spannanordnung (5) zum Halten des zu schneidenden Werkstücks (4) auf, wobei die Spannanordnung (5) Werkstück-Positionierungsmittel (24), eine Betätigungseinrichtung (15) mit einer Kolbenstange (36), die sich hieraus erstreckt, und ein flexibles Band (39) aufweist, mit einer Kette, die aus einer Reihe beabstandeter Rollen gebildet ist, die durch Glieder miteinander verbunden sind, und die einen Abschnitt aufweist, der das Werkstück (4) berührt, wenn es in den Werkstück-Positionierungsmitteln (24) angeordnet ist, wobei die Bewegung der Kolbenstange (36) von den Werkstück-Positionierungsmitteln (24) weg die Kette (39) veranlaßt, das Werkstück (4) in den Werkstück-Positionierungsmitteln (24) zu halten, worin die Kette (39) mit dem einen Ende an einer Kettenhalterung (37) angebracht ist, die an einem Ende der Kolbenstange (36) angebracht ist, das von der Betätigungseinrichtung (15) abgelegen ist, und worin die Kettenhalterung (37) mit einem Vorsprung (38) versehen ist, der sich durch einen Spalt erstreckt, der zwischen benachbarten Rollen in der Kette (39) ausgebildet ist, um lösbar mit der Kette (39) an einem Bereich dieser, der von dem genannten Ende entfernt ist, in Eingriff zu gelangen.

2. Ferngesteuerte Vorrichtung nach Anspruch 1, worin die Kettenhalterung (37) zwei Vorsprünge (38) aufweist, die sich durch zwei Spalte erstrecken, die zwischen aufeinanderfolgenden Rollen der Kette (39) ausgebildet sind.

3. Ferngesteuerte Vorrichtung nach Anspruch 1 oder Anspruch 2, worin die Kettenhalterung (37) so eingerichtet ist, daß das genannte eine Ende der Kette (39) mit dieser an einer Stelle unter der Längsachse der Kolbenstange (36) verbunden ist, und der Vorsprung oder die Vorsprünge (38) an der Kettenhalterung (37) in die Kette an einer Stelle oberhalb der genannten Achse eingreift bzw. eingreifen.

4. Ferngesteuerte Vorrichtung nach irgendeinem der vorangehenden Ansprüche, worin die Werkstück-Positionierungsmittel (24) zwei Flächen aufweisen, die mit einem Winkel zwischen ihnen angeordnet sind, und eine solche Anordnung getroffen ist, daS die Kette das Werkstück (4) gegen jede der Flächen andrückt.

5. Ferngesteuerte Vorrichtung nach irgendeinem der vorangehenden Ansprüche, worin die Betätigungseinrichtung (15) eine pneumatisch betriebene Zylinder- und Kolbenanordnung aufweist.

## Revendications

1. Appareil commandé à distance pour la coupe d'une pièce (4), qui comprend une scie (3) de coupe de la pièce (4) et un ensemble de serrage (5) destiné à maintenir la pièce (4) à couper, l'ensemble de serrage (5) comprenant un dispositif (24) de positionnement de pièce, un organe de manoeuvre (15) ayant une tige (36) de piston gui en dépasse, et une bande flexible (39) comprenant une chaîne formée par une série de rouleaux espacés interconnectés par des maillons et ayant une partie de contact avec la pièce (4) lorsqu'elle est placée dans le dispositif (24) de positionnement de pièce, si bien que le déplacement de la tige (36) du piston afin qu'il s'écarte du dispositif (24) de positionnement de pièce provoque le maintien de la pièce (4) par la chaîne (39) dans le dispositif (24) de positionnement de pièce, dans lequel la chaîne (39) est fixée à une première extrémité à un organe de fixation de chaîne (37) monté sur une extrémité de la tige du piston (36) qui est éloignée de l'organe de manoeuvre (15), et dans lequel l'organe de fixation (37) de chaîne a une saillie (38) qui passe par un espace formé entre des rouleaux adjacents de la chaîne (39) afin qu'elle coopère temporairement avec la chaîne (39) dans une région distante de la première extrémité.

2. Appareil commandé à distance selon la revendication 1, dans lequel l'organe (37) de fixation de chaîne possède deux saillies (38) qui s'étendent dans deux espaces formés entre des rouleaux successifs de la chaîne (39).

3. Appareil commandé à distance selon la revendication 1 ou 2, dans lequel l'organe (37) de fixation de chaîne est réalisé afin que ladite première extrémité de la chaîne (39) lui soit raccordée à un emplacement qui se trouve au-dessous d'un axe longitudinal de la tige de piston (36) et la saillie ou les saillies (39) de l'organe de fixation (37) de chaîne coopèrent avec la chaîne à un emplacement qui se trouve au-dessus de cet axe.

4. Appareil commandé à distance selon l'une quelconque des revendications précédentes, dans lequel le dispositif (24) de positionnement de pièce possède deux surfaces formant un angle mutuellement, la disposition étant telle que la chaîne maintient la pièce (4) contre chacune des surfaces.

5. Appareil commandé à distance selon l'une quelconque des revendications précédentes, dans lequel l'organe de manoeuvre (15) est un ensemble à vérin pneumatique.
